# EUROPEAN PATENT SPECIFICATION

(11) **EP 1 781 479 B1**
(45) Date of publication and mention of the grant of the patent: **09.02.2011**
(21) Application number: 05752141.1
(22) Date of filing: 03.06.2005
(51) Int. Cl.: B60H 1/00

(54) **MOTOR VEHICLE WITH VENTILATION DEVICE**
KRAFTFAHRZEUG MIT VENTILATIONSVORRICHTUNG
VEHICULE A MOTEUR AVEC DISPOSITIF DE VENTILATION

(30) Priority: 14.06.2004 SE 0401512
(43) Date of publication of application: 09.05.2007
(73) Proprietor: Scania CV AB (PUBL), 151 87 Södertälje (SE)
(72) Inventor: SKEPPSTRÖM, Tomas, S-151 35 Södertälje (SE); LIND, Jonas, S-144 51 Rönninge (SE); SÖDERBERG, Pehr, S-151 39 Södertälje (SE)
(86) International application number: PCT/SE2005/000840
(87) International publication number: WO 2005/120868

(56) References cited:
- WO-A1-01/84035
- DE-A1- 3 605 699
- DE-C1- 3 933 935
- US-A- 4 211 364
- US-A- 4 575 128

## Description

### Technical field

The present invention relates to a motor vehicle with a chassis, a cab which can be tilted relative to the chassis, and a ventilation device for leading air to the cab, according to the preamble of claim 1.

### Description of state of the art

Motor vehicles are vehicles provided with an engine and intended to carry persons or cargo on land. Motor vehicles with an interior space in which driver and passengers are accommodated are often provided with ventilation devices for heating or cooling the air within the interior space. Ventilation devices in today's motor vehicles are usually arranged to take air from the vehicle's surroundings and lead the air into the interior space. Depending on the temperature of the surrounding air, the air may need heating or cooling to reach desired temperature. To this end, at least one and often two heat exchangers are usually provided, one of them adapted to cooling the air being led into the interior space and the other to heating the air being led into the interior space. The heat exchanger adapted to heating the air intended for the interior space is usually connected to the cooling system of the engine which powers the motor vehicle. The heat exchanger adapted to cooling the air intended for the interior space is connected to a cooling circuit which usually comprises a cooling medium, a compressor and a condenser. The compressor is usually driven by the engine of the motor vehicle. Ventilation devices in today's vehicles may also be adapted to recirculating the air, which entails the air being led from the interior space, passed through heat exchangers and led back to the interior space. Recirculation of the air makes it possible to cool the air without taking new air from the surroundings of the vehicle. This is advantageous, for example, when the air round the motor vehicle is bad, as is the case, for example, when the motor vehicle is in a tunnel.

A particular type of motor vehicle is a truck with a tiltable cab. An example of such a motor vehicle is described in the American patent US 4,921,0621 and in the German patent DE 39 33 935. In trucks with tiltable cab, the heat exchangers are arranged on the cab, whereas the compressor is arranged on the engine which is secured to the chassis. Between the compressor and the heat exchanger for cooling and between the engine and the heat exchanger for heating, respective pipelines are provided to carry the cooling medium from the compressor and the coolant from the engine. As the cab is tiltable, the heat exchangers will move relative to the compressor and the engine when the cab tilts. Moreover, the cab is often arranged resiliently relative to the chassis, which means that the heat exchangers move somewhat relative to the compressor and the engine when the motor vehicle is in motion. This means that the pipelines for the cooling medium and the coolant have to be flexible. At present the required flexibility for the pipelines is often provided by means of reinforced rubber hoses.

At present the coolant is often some form of freon. Owing to government decisions in a number of countries, however, freon will need to be replaced by some other cooling medium in new vehicles. One alternative to freon is carbon dioxide. However, carbon dioxide requires significantly higher pressure in the pipelines for it to be able to serve as cooling medium. Today's reinforced rubber hoses are not sufficiently resistant to high pressure to be able to be used at the high pressure required to enable carbon dioxide to be used as cooling medium, so their service life will not be long enough for them to be used in this context.

### Summary of the invention

One of the objects of the present invention is to provide a motor vehicle with a tiltable cab which solves the problems of the state of the art which are above.

Another object of the present invention is provide a motor vehicle with a tiltable cab and a ventilation device comprising a compressor, a heat exchanger and pipelines between them, whereby the pipelines between the compressor and the heat exchanger have acceptable service life at the pressure required when using, for example, carbon dioxide as cooling medium.

These objects are fulfilled by a motor vehicle according to the attached independent claim.

Further advantages are achieved by the features defined by the dependent claims.

A motor vehicle according to the invention comprises a chassis, a cab which defines an interior space and is tiltable relative to the chassis, and a ventilation device for supply of air to the interior space. The ventilation device comprises a heat exchanger housing with at least one heat exchanger for altering the temperature of the air which is to be led into the cab, and an air distribution housing for distribution of the air to the interior space. The motor vehicle is characterised in that the heat exchanger housing is arranged on the chassis and that the air distribution housing is arranged on the cab so that the air distribution housing moves with the cab when the latter tilts.

In a motor vehicle according to the invention, there is no need to provide flexible pipelines to the heat exchanger arranged in the heat exchanger housing on the chassis, since the heat exchanger housing is substantially stationary relative to the chassis. As the motor vehicle according to the invention makes it possible to use pipelines which are not flexible, it is possible to use, for example, metal pipes. The use of metal pipes is an inexpensive and easy way of creating pipelines with good resistance to high pressure.

It is possible for the heat exchanger housing to be suspended resiliently relative to the chassis so long as its movements do not make flexible pipelines necessary for carrying the liquid to the heat exchanger in the heat exchanger housing.

The air which is to be distributed in the interior space is first led past the heat exchanger in the heat exchanger housing before being led on to the air distribution housing from which the air is distributed in the interior space. A connecting device is with advantage adapted to providing an airway between the heat exchanger housing and the air distribution housing at least when the cab is not tilted. Either the connecting device is adapted to providing the airway irrespective of whether the cab is tilted or untilted, or the airway is only provided when the cab is untilted. It is in principle when the cab is not tilted that temperated air needs to be led to the interior space.

The connecting device may be adapted to allowing mutual movement between the air distribution housing and the heat exchanger when the cab is not tilted, and to allowing tilting of the cab relative to the chassis, with maintenance of the airway between the heat exchanger housing and the air distribution housing when the cab is tilted. Allowing movement between the chassis and the cab makes possible the necessary movements which occur if the cab is sprung relative to the chassis. Providing an airway between the heat exchanger housing and the air distribution housing even when the cab is tilted minimises the risk of refuse and dirt making their way into the airway and thereafter being led to the air distribution housing and thence into the interior space. A connecting device which provides an airway irrespective of whether the cab is tilted or not can be created in many ways, some of which are described in more detail below in the description of various embodiments of the invention.

Depending on how the air distribution housing is arranged relative to the heat exchanger housing, it may be necessary for the connecting device to be adapted to allowing pivoting of the air distribution housing relative to the heat exchanger housing. Allowing pivoting makes it easier to provide the airway between the air distribution housing and the heat exchanger housing, which airway is maintained when the cab tilts.

The connecting device may be adapted to allowing pivoting between the air distribution housing and the heat exchanger housing in a number of different ways. One way is to cause the cab to be tiltable about a tilt axis and to cause the connecting device to be pivotably connected to the heat exchanger housing about a spindle which is substantially parallel with the tilt axis. Another way is to cause the cab to be tiltable about a tilt axis and to cause the connecting device to be tiltably connected to the air distribution housing about a spindle which is substantially parallel with the tilt axis. The connecting device may be arranged to comprise a first flexible pipe and a second flexible pipe connected respectively to the air distribution housing and the heat exchanger housing, and an intermediate portion arranged between the first flexible pipe and the second flexible pipe. Such an arrangement makes it possible to accommodate a relatively large mutual movement between the heat exchanger housing and the air distribution housing in combination with a small internal volume change in the connecting device. It is advantageous to minimise the internal volume change within the connecting device in response to movements between the heat exchanger housing and the air distribution housing, since such a volume change affects the flow of air from the air distribution housing. When the motor vehicle travels over a bump in the road surface, the cab and the air distribution housing will move towards the chassis and the heat exchanger housing. If the internal volume within the connecting device changes when the air distribution housing moves towards the heat exchanger housing, travelling over the bump will lead to an air shock in the interior space. Such uncontrolled air shocks are undesirable.

To minimise the volume change within the connecting device, the intermediate portion between the first flexible pipe and the second flexible pipe may be arranged substantially perpendicular to the direction of mutual movement between the air distribution housing and the heat exchanger housing when the cab moves relative to the chassis while the motor vehicle is in motion. The intermediate portion is thus enabled to pivot so that the connecting device can move with the movement when the air distribution housing moves relative to the heat exchanger housing.

In cases where the cab is tiltable about a tilt axis, the aforementioned intermediate portion may comprise two rigid pipes pivotable relative to one another about a central axis for the two rigid pipes. It is then easier for the intermediate portion to move with movements between the air distribution housing and the heat exchanger housing which occur when the cab moves relative to the chassis while the motor vehicle is in motion. Moreover, such an intermediate portion is advantageous when the cab tilts, since the intermediate portion can then absorb necessary pivoting movements between the air distribution housing and the heat exchanger housing. The intermediate portion with two mutually pivotable rigid pipes may be combined with or replace the previously described pivotable arrangement of the connecting device in the air distribution housing and the heat exchanger housing.

In addition to being mutually pivotable, the rigid pipes may also be capable of linear movement relative to one another along the central axis. Arranging the two rigid pipes in this manner makes it easier to absorb the necessary movements when the cab tilts.

The intermediate portion may be a rigid pipe arranged substantially perpendicular to the tilt axis. Arranging the pipe in this way requires no pivoting between the fastening of the connecting device in the air distribution housing and the fastening of the connecting device in the heat exchanger housing when the cab tilts, so there is no need for any pivotability between them.

Instead of the connecting device constituting an airway between the air distribution housing and the heat exchanger housing irrespective of whether the cab is tilted or not, the air distribution housing may be disconnected from the heat exchanger housing when the cab is tilted, whereby the connecting device will allow mutual movement between the air distribution housing and the heat exchanger housing when the cab is not tilted. Such a connecting device may comprise a flexible pipe.

The various features described above may of course, where applicable, be combined in the same embodiment. Embodiments of the invention are described below with reference to the attached drawings.

### Brief description of the drawings

Fig. 1 depicts schematically a motor vehicle according to an embodiment of the present invention which comprises a ventilation device with a heat exchanger.
Fig. 2 depicts in more detail the ventilation device in a motor vehicle according to a first embodiment of the present invention.
Fig. 3 depicts in more detail the ventilation device in a motor vehicle according to a second embodiment of the present invention.
Fig. 4 depicts in more detail the ventilation device in a motor vehicle according to a third embodiment of the present invention.
Fig. 5 depicts in more detail the ventilation device in a motor vehicle according to a fourth embodiment of the present invention.

### Description of preferred embodiments

In the ensuing description of preferred embodiments of the invention, mutually corresponding features in the various embodiments are denoted by the same reference notation.

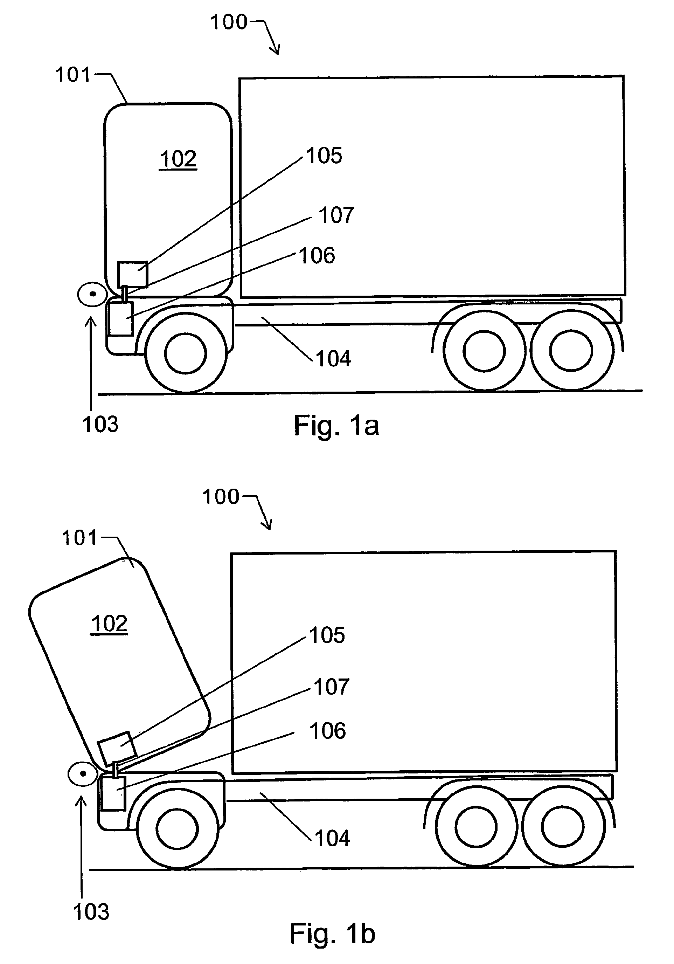

Fig. 1 depicts schematically a motor vehicle 100 according to an embodiment of the present invention. The motor vehicle 100 comprises a cab 101 which defines an interior space 102, and a chassis 104 relative to which the cab 101 is tiltable about a tilt axis 103. The motor vehicle 1 further comprises a ventilation device which itself comprises a heat exchanger housing 106 and an air distribution housing 105, between which a connecting device 107 is provided which constitutes an airway between the heat exchanger housing 106 and the air distribution housing 105. Fig. 1a depicts the motor vehicle when the cab is not tilted, Fig. 1b depicts the motor vehicle when the cab is tilted. Fig. 1 depicts the tilt axis 103 somewhat forward of the motor vehicle 100 for the sake of clarity. The tilt axis 103 may nevertheless be situated within the motor vehicle 100 and coincide with a physical tilt spindle.

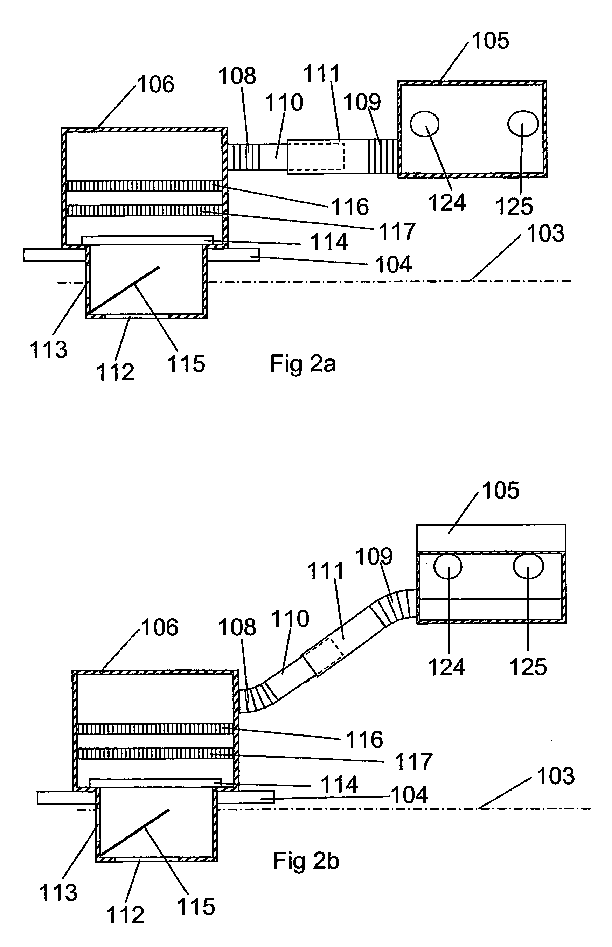

Fig. 2 depicts in more detail the ventilation device in a motor vehicle according to a first embodiment of the present invention. The heat exchanger housing 106, the air distribution housing 105 and the connecting device 107 are depicted when the cab is not tilted in Fig. 2a and when the cab is tilted in Fig. 2b. The heat exchanger housing 106 and the air distribution housing 105 are depicted partly cut away in Fig. 2a and Fig. 2b. The heat exchanger housing 106, which is arranged on the chassis 104, is connectable to the air distribution housing 105 by a connecting device 107. The connecting device 107 comprises a first flexible pipe 108, a second flexible pipe 109, a first rigid pipe 110 and a second rigid pipe 111. The first rigid pipe 110 is partly arranged inside the second rigid pipe 111 so that the first rigid pipe 110 is capable of pivoting and linear movement relative to the second rigid pipe 111. A fan 114 is arranged on the heat exchanger housing 106 to drive air through the heat exchanger housing 106. The air driven through the heat exchanger housing comes from a first air intake 112 which takes air from the surroundings of the motor vehicle 100, or from a second air intake 113 which takes air from the interior space. Air is taken from the interior space in situations where the air is to be recirculated as mentioned above. A distribution means 115 is provided for selecting which of the air intakes 112, 113 air is to be taken from.

The heat exchanger housing 106 accommodates a first heat exchanger 116 for heating the air passing through the heat exchanger housing 106, and a second heat exchanger 117 for cooling the air passing through the heat exchanger housing 106. Hot liquid is led through the first heat exchanger 116 in a known manner, and cold liquid is led through the second heat exchanger 117 in a known manner. The way the hot and cold liquids are provided is previously known to specialists and will not be described in detail here. The degree of heating of the air passing through the heat exchanger housing 106 is determined by the temperature and flow of the liquid passing through each of the heat exchangers 116.

During operation of the ventilation device, the distribution means 115 is used to select the extent to which air is to be taken from the first air intake 112 or the second air intake 113. The fan 114 then leads the air through the heat exchanger housing 106, past the heat exchangers 116, 117 and through the connecting device 107 to the air distribution housing 105, from which the air is distributed in the interior space 102 via outlets 124, 125. The diagrams show only two outlets 124, 125 but it is possible for there to be a large number of outlets 124, 125 leading to various nozzles in the interior space 102. While the vehicle 100 is in motion, the air distribution housing 105 will move relative to the heat exchanger housing 106, whereupon the first flexible pipe 108 and the second flexible pipe 109 will bend, while the first rigid pipe 110 and the second rigid pipe 111 will pivot relative to the air distribution housing 105 and the heat exchanger housing 106.

Fig. 2b depicts the air distribution housing 105, the heat exchanger housing 106 and the connecting device 107 when the cab is tilted. As may be seen in the drawing, the first rigid pipe 110 is arranged inside the second rigid pipe 111 to a smaller extent in Fig. 2b than in Fig. 2a. The first flexible pipe 108 and the second flexible pipe 109 have also bent and the first rigid pipe 110 and the heat exchanger housing 106 have pivoted relative to the second rigid pipe 111 and the air distribution housing 105. The airway is thus provided between the air distribution housing 105 and the heat exchanger housing 106 irrespective of whether the cab is tilted or untilted.

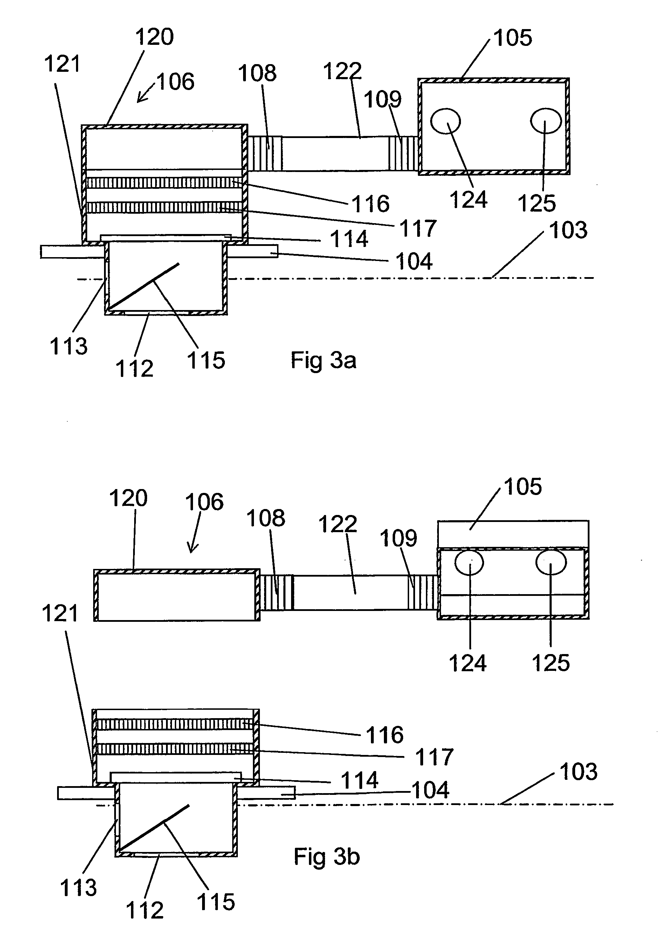

Fig. 3 depicts in more detail the ventilation device according to a second embodiment of the present invention. The ventilation device in Fig. 3 is in many respects similar to the ventilation device in Fig. 2. Only the parts which differ between the ventilation devices in Fig. 2 and Fig. 3 will be described here. Unlike the heat exchanger housing 106 in Fig. 2, the heat exchanger housing 106 in Fig. 3 is dividable into an upper portion 120 and a lower portion 121. Fig. 3 a depicts the ventilation device when the cab is not tilted, while Fig. 3b depicts the ventilation device when the cab is tilted. In Fig. 3b the upper portion is separated from the lower portion. Unlike the ventilation device in Fig. 2, the connecting device 107 in Fig. 3 comprises only a first flexible pipe 108, a second flexible pipe 109 and a rigid pipe 122. As the upper portion 120 of the heat exchanger is separated from the latter's lower portion 121 when the cab is tilted, the connecting device need not allow pivoting between the upper portion 120 of the heat exchanger and the air distribution housing 105. The connecting device need only be adapted to allowing springing movement between the chassis 104 and the cab 101, which is catered for by the first flexible pipe 108 and the second flexible pipe 109.

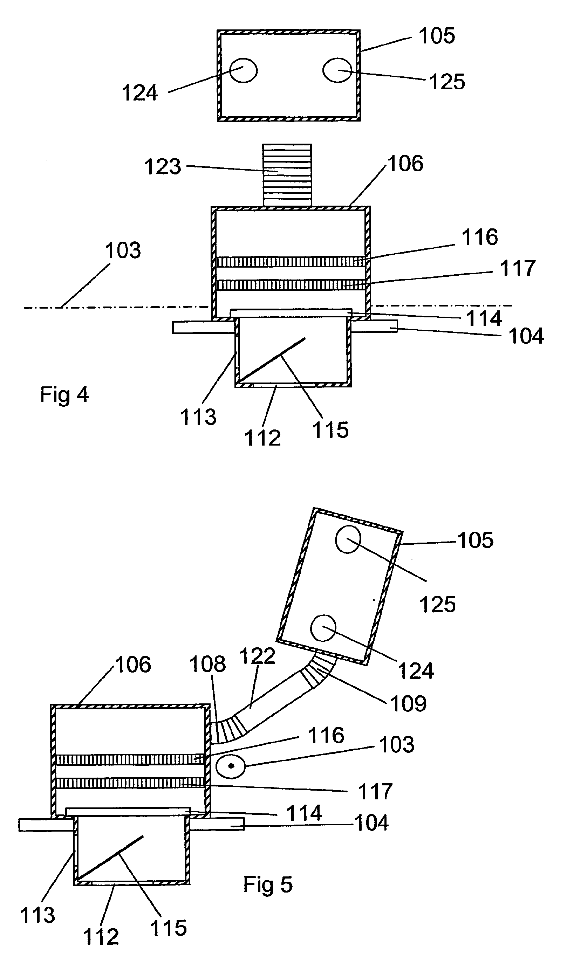

Fig. 4 shows in more detail the ventilation device in a motor vehicle according to a third embodiment of the present invention when the cab is tilted. The connecting device between the heat exchanger housing 106 and the air distribution housing 105 comprises a flexible pipe 123. When the cab is untilted, the connecting device will also abut against the air distribution housing 105 and provide an airway. The flexible pipe 123 is resilient to allow movement between the heat exchanger housing 106 and the air distribution housing 105 when the motor vehicle 100 is in motion, without the airway being interrupted between the heat exchanger housing 106 and the air distribution housing 105. It is of course possible to arrange the flexible pipe 123 so that it is long enough to constitute an unbroken airway even when the cab is tilted.

Fig. 5 depicts in more detail the ventilation device in a motor vehicle according to a third embodiment of the present invention when the cab is tilted. The ventilation device in Fig. 5 is depicted in the plane transverse to the pivot axis 103, unlike the ventilation device depicted in Fig. 2, Fig. 3 and Fig. 4. The heat exchanger housing 106 and the air distribution housing 105 are pivotable 90 degrees relative to how they are depicted in Fig. 2, Fig. 3 and Fig. 4. The connecting device 107 between the heat exchanger housing 106 and the air distribution housing 105 comprises a first flexible pipe 108, a second flexible pipe 109 and a rigid pipe 122. As the rigid pipe 122 is arranged transversely to the pivot axis 103, no pivoting movement occurs along the connecting device 107.

The invention is not limited to the embodiments described above of the present invention. A specialist within the field may modify the embodiments described above in many ways without departing from the scope of the attached claims.

## Claims

1. A motor vehicle (100) comprising a chassis (104), a cab (101) which defines an interior space (102) and is tiltable relative to the chassis (104), and a ventilation device (105, 106, 107) for supply of air to the interior space (102), which ventilation device (105, 106, 107) comprises a heat exchanger housing (106) with a lower portion (121) containing at least one heat exchanger (116, 117) for altering the temperature of the air that is to be led into the interior space (102), and an air distribution housing (105) for distributing the air to the interior space (102), **characterised in that** at least the lower portion (121) of the heat exchanger housing (106) is arranged on the chassis (104) and that the air distribution housing (105) is arranged on the cab (101) so that the air distribution housing (105) moves with the cab (101) when the latter tilts.

2. A motor vehicle (100) according to claim 1 whereby a connecting device (107) is adapted to providing an airway between the heat exchanger housing (106) and the air distribution housing (105) at least when the cab (101) is not tilted.

3. A motor vehicle (100) according to claim 2 whereby the connecting device (107) is so arranged as to allow mutual movement between the air distribution housing (105) and the heat exchanger housing (106) when the cab (101) is not tilted, and to allow tilting of the cab (101) relative to the chassis (104), whereby the airway between the heat exchanger housing (106) and the air distribution housing (105) is maintained when the cab (101) is tilted.

4. A motor vehicle (100) according to claim 3 whereby the connecting device (107) is adapted to allowing pivoting of the air distribution housing (105) relative to the heat exchanger housing (106).

5. A motor vehicle (100) according to claim 4 whereby the cab (101) is tiltable about a tilt axis (103) and whereby the connecting device (107) is pivotably connected to the heat exchanger housing (106) about an axis which is substantially parallel with the tilt axis (103).

6. A motor vehicle (100) according to claim 4 or 5 whereby the cab is tiltable about a tilt axis (103) and whereby the connecting device (107) is pivotably connected to the air distribution housing (105) about an axis which is substantially parallel with the tilt axis (103).

7. A motor vehicle (100) according to claim 3, 4, 5 or 6 whereby the connecting device (107) comprises a first flexible pipe (108) and a second flexible pipe (109) which are connected respectively to the air distribution housing (105) and the heat exchanger housing (106), and an intermediate portion (101, 111, 122) arranged between the first flexible pipe (108) and the second flexible pipe (109).

8. A motor vehicle (100) according to claim 7 whereby the cab (101) is tiltable about a tilt axis (103) and whereby the intermediate portion (101, 111) comprises two rigid pipes (110, 111) which are pivotable relative to one another about a central axis (130) for the two rigid pipes (110, 111).

9. A motor vehicle (100) according to claim 8 whereby the rigid pipes (110, 111) are capable of linear movement relative to one another along the central axis (130).

10. A motor vehicle (100) according to claim 7 whereby the intermediate portion (110, 111, 122) is a rigid pipe (122) arranged substantially perpendicular to the tilt axis (103).

11. A motor vehicle (100) according to claim 2 whereby the air distribution housing (105) is disconnected from the heat exchanger housing (106) when the cab (101) is tilted, and whereby the connecting device (107) allows mutual movement between the air distribution housing (105) and the heat exchanger housing (106) when the cab (101) is not tilted.

12. A motor vehicle (100) according to claim 11 whereby the connecting device (107) comprises a flexible pipe (123).

13. A motor vehicle (100) according to claim 12 whereby the connecting device (107) comprises a first flexible pipe (108) and a second flexible pipe (109) which are respectively arranged in the air distribution housing (105) and the heat exchanger housing (106) when the cab (101) is not tilted, and an intermediate portion (122) arranged between the first flexible pipe (108) and the second flexible pipe (109).

## Patentansprüche

1. Kraftfahrzeug (100), umfassend ein Fahrgestell (104), ein Fahrerhaus (101), welches einen Innenraum (102) definiert und relativ zu dem Fahrgestell (104) kippbar ist, und eine Ventilationsvorrichtung (105, 106, 107) zum Zuführen von Luft in den Innenraum (102), wobei die Ventilationsvorrichtung (105, 105, 107) ein Wärmetauschergehäuse (106) mit einem unteren Bereich (121), der wenigstens einen Wärmetauscher (115, 117) zum Ändern der in den Innenraum (102) zu führenden Luft aufweist, und ein Luftverteilergehäuse (105) zum Verteilen der Luft in dem Innenraum (102) umfasst,
**dadurch gekennzeichnet, dass** zumindest der untere Bereich (121) des Wärmetauschergehäuses (106) an dem Fahrgestell (104) angeordnet ist, und dass das Luftverteilergehäuse (105) an dem Fahrerhaus (101) angeordnet ist, so dass sich das Luftverteilergehäuse (105) mit dem Fahrerhaus (101) bewegt, wenn letzteres gekippt wird.

2. Kraftfahrzeug (100) nach Anspruch 1, wobei eine Verbindungsvorrichtung (107) dazu ausgebildet ist, einen Luftstrom zwischen dem Wärmetauschergehäuse (106) und dem Luftverteilergehäuse (105) zumindest dann bereitzustellen, wenn das Fahrerhaus (101) nicht gekippt wird.

3. Kraftfahrzeug (100) nach Anspruch 2, wobei die Verbindungsvorrichtung (107) angeordnet ist, um eine gegenseitige Bewegung zwischen dem Luftverteilergehäuse (105) und dem Wärmetauschergehäuse (106) zu erlauben, wenn das Fahrerhaus (101) nicht gekippt wird, und das Kippen des Fahrerhauses (101) relativ zu dem Fahrgestell (104) zu erlauben, wobei der Luftstrom zwischen dem Wärmetauschergehäuse (106) und dem Luftverteilergehäuse (105) beibehalten wird, wenn das Fahrerhaus (101) gekippt wird.

4. Kraftfahrzeug (100) nach Anspruch 3, wobei die Verbindungsvorrichtung (107) dazu ausgebildet ist, das Drehen des Luftverteilergehäuses (105) relativ zu dem Wärmetauschergehäuse (106) zu erlauben.

5. Kraftfahrzeug (100) nach Anspruch 4, wobei das Fahrerhaus (101) kippbar um eine Kippachse (103) ist, und wobei die Verbindungsvorrichtung (107) schwenkbar mit dem Wärmetauschergehäuse (106) über eine Achse verbunden ist, welche im Wesentlichen parallel zu der Drehachse (103) ist.

6. Kraftfahrzeug (100) nach Anspruch 4 oder 5, wobei das Fahrerhaus kippbar um eine Drehachse (103) ist, und wobei die Verbindungsvorrichtung (107) schwenkbar mit dem Luftverteilergehäuse (105) über eine Achse verbunden ist, welche im Wesentlichen parallel zu der Drehachse (103) ist.

7. Kraftfahrzeug (100) nach den Ansprüchen 3, 4, 5 oder 6, wobei die Verbindungsvorrichtung (107) eine erste bewegliche Röhre (108) und eine zweite bewegliche Röhre (109), welche entsprechend mit dem Luftverteilergehäuse (105) und dem Wärmetauschergehäuse (106) verbunden sind, und einen dazwischenliegenden Bereich (101, 111, 122) umfasst, der zwischen der ersten beweglichen Röhre (108) und der zweiten beweglichen Röhre (109) angeordnet ist.

8. Kraftfahrzeug (100) nach Anspruch 7, wobei das Fahrerhaus (101) kippbar um eine Drehachse (103) ist, und wobei der dazwischenliegende Bereich (101, 111, 122) zwei starre Röhren (110, 111) umfasst, welche über eine Mittelachse (130) für die zwei starren Röhren (110, 111) relativ zueinander schwenkbar sind.

9. Kraftfahrzeug (100) nach Anspruch 8, wobei die starren Röhren (110, 111) im Stande sind, eine lineare Bewegung relativ zueinander entlang der Mittelachse (130) auszuführen.

10. Kraftfahrzeug (100) nach Anspruch 7, wobei der dazwischenliegende Bereich (110, 111, 122) eine starre Röhre (122) ist, die im Wesentlichen rechtwinklig zu der Kippachse (103) angeordnet ist.

11. Kraftfahrzeug (100) nach Anspruch 2, wobei das Luftverteilergehäuse (105) von dem Wärmetauschergehäuse (106) getrennt wird, wenn das Fahrerhaus (101) gekippt wird, und wobei die Verbindungsvorrichtung (107) eine gegenseitige Bewegung zwischen dem Luftverteilergehäuse (105) und dem Wärmetauschergehäuse (106) erlaubt, wenn das Fahrerhaus (101) nicht gekippt wird.

12. Kraftfahrzeug (100) nach Anspruch 11, wobei die Verbindungsvorrichtung (107) eine bewegliche Röhre (123) umfasst.

13. Kraftfahrzeug (100) nach Anspruch 12, wobei die Verbindungsvorrichtung (107) eine erste bewegliche Röhre (108) und eine zweite bewegliche Röhre (109), welche entsprechend in dem Luftverteilergehäuse (105) und dem Wärmetauschergehäuse (106) angeordnet sind, wenn das Fahrerhaus (101) nicht gekippt wird, und einen dazwischenliegenden Bereich (122) umfasst, der zwischen der ersten beweglichen Röhre (108) und der zweiten beweglichen Röhre (109) angeordnet ist.

## Revendications

1. Véhicule automobile (100) comprenant un châssis (104), une cabine (101) qui définit un espace intérieur (102) et qui peut basculer par rapport au châssis (104), et un dispositif de ventilation (105, 106, 107) destiné à fournir de l'air à l'espace intérieur (102), lequel dispositif de ventilation (105,106,107) comprend un boîtier d'échangeur de chaleur (106) comportant une partie inférieure (121) qui contient au moins échangeur de chaleur (116, 117) destiné à faire varier la température de l'air qui doit être envoyé à l'espace intérieur (102), et un boîtier de distribution d'air (105) destiné à distribuer l'air jusqu'à l'espace intérieur (102), **caractérisé en ce qu'**au moins la partie inférieure (121) du boîtier d'échangeur de chaleur (106) est disposée sur le châssis (104) et que le boîtier de distribution d'air (105) est disposé sur la cabine (101) de sorte que le boîtier de distribution d'air (105) se déplace avec la cabine (101) lorsque cette dernière bascule.

2. Véhicule automobile (100) selon la revendication 1 dans lequel un dispositif de raccordement (107) est adapté pour créer une voie d'air entre le boîtier d'échangeur de chaleur (106) et le boîtier de distribution d'air (105) au moins lorsque la cabine (101) n'est pas basculée.

3. Véhicule automobile (100) selon la revendication 2 dans lequel le dispositif de raccordement (107) est disposé de manière à permettre un mouvement relatif entre le boîtier de distribution d'air (105) et le boîtier d'échangeur de chaleur (106) lorsque la cabine (101) n'est pas basculée, et à permettre le basculement de la cabine (101) par rapport au châssis (104), dans lequel la voie d'air entre le boîtier d'échangeur de chaleur (106) et le boîtier de distribution d'air (105) est maintenue lorsque la cabine (101) est basculée.

4. Véhicule automobile (100) selon la revendication 3 dans lequel le dispositif de raccordement (107) est adapté pour permettre un pivotement du boîtier de distribution d'air (105) par rapport au boîtier d'échangeur de chaleur (106).

5. Véhicule automobile (100) selon la revendication 4 dans lequel la cabine (101) peut basculer autour d'un axe de basculement (103), et dans lequel le dispositif de raccordement (107) est relié au boîtier d'échangeur de chaleur (106) avec possibilité de pivotement autour d'un axe qui est sensiblement parallèle à l'axe de basculement (103).

6. Véhicule automobile (100) selon la revendication 4 ou 5 dans lequel la cabine peut basculer autour d'un axe de basculement (103) et dans lequel le dispositif de raccordement (107) est relié au boîtier de distribution d'air (105) avec possibilité de pivotement autour d'un axe qui est sensiblement parallèle à l'axe de basculement (103).

7. Véhicule automobile (100) selon la revendication 3, 4, 5 ou 6 dans lequel le dispositif de raccordement (107) comprend un premier tuyau flexible (108) et un second tuyau flexible (109) qui sont raccordés respectivement au boîtier de distribution d'air (105) et au boîtier d'échangeur de chaleur (106), et une partie intermédiaire (101, 111, 122) agencée entre le premier tuyau flexible (108) et le second tuyau flexible (109).

8. Véhicule automobile (100) selon la revendication 7 dans lequel la cabine (101) peut basculer autour d'un axe de basculement (103) et dans lequel la partie intermédiaire (101, 111) comprend deux tuyaux rigides (110, 111) qui peuvent pivoter l'un par rapport à l'autre autour d'un axe central commun aux deux tuyaux rigides (110, 111).

9. Véhicule automobile (100) selon la revendication 8 dans lequel les tuyaux rigides (110, 111) sont capables de décrire un mouvement linéaire l'un par rapport à l'autre le long de l'axe central.

10. Véhicule automobile (100) selon la revendication 7 dans lequel la partie intermédiaire (110, 111, 122) est un tuyau rigide (122) disposé sensiblement perpendiculairement à l'axe de basculement (103).

11. Véhicule automobile (100) selon la revendication 2 dans lequel le boîtier de distribution d'air (105) est déconnecté du boîtier d'échangeur d'air (106) lorsque la cabine (101) est basculée, et dans lequel le dispositif de raccordement (107) permet un mouvement relatif entre le boîtier de distribution d'air (105) et le boîtier d'échangeur de chaleur (106) lorsque la cabine (101) n'est pas basculée.

12. Véhicule automobile (100) selon la revendication 11 dans lequel le dispositif de raccordement (107) comprend un tuyau flexible (123)

13. Véhicule automobile (100) selon la revendication 12 dans lequel le dispositif de raccordement (107) comprend un premier tuyau flexible (108) et un second tuyau flexible (109) qui sont respectivement disposés dans le boîtier de distribution d'air (105), et dans le boîtier d'échangeur de chaleur (106) lorsque la cabine (101) n'est pas basculée, ainsi qu'une partie intermédiaire (122) disposée entre le premier tuyau flexible (108) et le second tuyau flexible (109).
